# EUROPEAN PATENT APPLICATION

(11) **EP 4 749 476 A1**
(43) Date of publication of application: **27.05.2026**
(21) Application number: 24853785.4
(22) Date of filing: 14.08.2024
(51) Int. Cl.: G06F 16/332

(54) **QUESTION ANSWERING SEARCHING METHOD AND CORRESPONDING APPARATUS**

(30) Priority: 17.08.2023 CN 202311044309
(71) Applicant: Huawei Technologies Co., Ltd., Shenzhen, Guangdong 518129 (CN)
(72) Inventor: WU, Xiaolong, Shenzhen, Guangdong 518129 (CN); HOU, Shengluan, Shenzhen, Guangdong 518129 (CN); ZHANG, Xinyu, Shenzhen, Guangdong 518129 (CN); KANG, Sichen, Shenzhen, Guangdong 518129 (CN); CAO, Zhao, Shenzhen, Guangdong 518129 (CN); ZHAO, Shiqi, Shenzhen, Guangdong 518129 (CN)
(74) Representative: MERH-IP Matias Erny Reichl Hoffmann Patentanwälte PartG mbB
(86) International application number: PCT/CN2024/111922
(87) International publication number: WO 2025/036377

(57) **Abstract**

A search and question answering method may be applied to a device-cloud synergy scenario. The method includes: A client sends a query request (query) and historical information to a cloud, and the cloud guides generation of an answer to the query request based on the historical information, to obtain the answer associated with the historical information. Because the historical information may reflect a feature of a user who uses the client, the answer generated in this way better aligns with user perception, improving a degree of matching between the answer and the user.

## Description

This application claims priority to Chinese Patent Application No. 202311044309.6, filed with the China National Intellectual Property Administration on August 17, 2023 and entitled "SEARCH AND QUESTION ANSWERING METHOD AND CORRESPONDING APPARATUS", which is incorporated herein by reference in its entirety.

### TECHNICAL FIELD

This application relates to the field of communication technologies, and in particular, to a search and question answering method and a corresponding apparatus.

### BACKGROUND

Search is generally a retrieval technology that uses a specific policy to retrieve specified information from the Internet based on a user requirement and a particular algorithm, and feed back the information to a user. A key feature of search is to find some webpages/documents that are most related to a user query from a massive webpage library/document library.

Question answering (question answering, QA) is a form of search. It can use accurate and concise natural language to answer a question raised by the user in natural language, to meet requirements of people for quickly and accurately obtaining information. Different from search, question answering directly provides answers instead of related webpages or documents.

In a current search and question answering system, a same query generates basically a same answer for all users.

### SUMMARY

This application provides a search and question answering method, to improve a degree of matching between an answer and a user. This application further provides a corresponding apparatus, a computer-readable storage medium, a computer program product, and the like.

A first aspect of this application provides a search and question answering method, including: sending a first query request (query) and corresponding historical information to a cloud, where the historical information includes at least one of a historical query request associated with the first query request and a corresponding answer; receiving a first answer from the cloud, where content of the first answer is associated with the historical information; and presenting the first answer.

In this application, search and question answering is a search process in which an accurate answer (answering) is given based on a question (question).

In this application, the cloud may be software or a service of a cloud platform, or may be software or a service deployed on a node in a network, such as an edge node. The cloud may run on an independent physical machine or on a virtualized resource.

In this application, the client may be a terminal device, or may be an application. For example, the application is run on the terminal device for use by a user. The application may be a plurality of question answering or dialog applications such as a search engine, an intelligent voice assistant, and an agentic social tool.

In this application, the historical information may be at least one of historical query requests sent by a user by using a same terminal device or a same user account and answers respectively corresponding to the historical query requests. In other words, the historical information may be only a historical query request, or may be only an answer corresponding to the historical query request, or may include both a historical query request and a corresponding answer.

In this application, the first answer is generated on the cloud under guidance of the historical information from the client, and the historical information may reflect a feature of a user who uses the client. The first answer generated in this way better aligns with user perception, and is a high-quality answer that meets personality of the user, so that a degree of matching between the answer and the user can be improved.

In a possible implementation, before sending the first query request and the corresponding historical information to the cloud, the method further includes: parsing the first query request, to retrieve the historical information from a plurality of historical query requests and corresponding answers that are stored on a client, where a similarity between the historical information and the first query request is greater than a first threshold.

In this possible implementation, it is considered that the client may store a large amount of historical information, and many pieces of historical information may be irrelevant to the first query request and have no reference value. Therefore, the client filters locally stored historical information with reference to the first query request. A principle of filtering may also be determining, by using a cosine similarity or another distance calculation method, the historical information related to the first query request. In this way, accuracy of guiding the first answer by the historical information can be improved, and performing filtering on the client can further enhance privacy of user data, and reduce an amount of data of the historical information transmitted to the cloud.

In a possible implementation, the first answer is determined by the cloud based on a second query request, and the second query request is obtained by the cloud by rewriting the first query request based on the historical information.

In this possible implementation, the first query request may not completely comply with a specification, and it is difficult for machine identification. The cloud may first rewrite the first query request with reference to the historical information, so that the machine can well understand content that the user wants to search for by entering the first query request. In this way, efficiency and quality of search and question answering can be improved.

In a possible implementation, the first query request further includes a first style selected by a user, and the first style indicates a presentation form of the first answer; and the step of presenting the first answer includes: presenting the content of the first answer in the first style.

In a possible implementation, the first style is selected by the user from a plurality of styles through a style button on a search and question answering interface, and the plurality of styles are displayed after the style button is triggered.

In the foregoing possible implementation, a style button may be disposed on the client, and the style button may be associated with a plurality of styles, for example, a strict style, a warm style, and an anime style. The user may select an answer presentation style on displayed style options of the plurality of styles. In this way, when the client sends the first query request, the first style is carried, and the cloud combines the first style with the content of the first answer to obtain the first answer. Then, after receiving the first answer, the client presents the content of the first answer in the first style. Optionally, after the user selects the first style, the client may not carry the first style in the first query request, but after receiving the content of the first answer, adjusts the content of the first answer based on the first style and then presents the adjusted content.

In this application, the content of the answer is presented based on the style selected by the user, so that a degree of matching between an answer presentation form and a user preference can be improved, thereby improving user stickiness.

In a possible implementation, the first answer includes a second style, and the second style is a presentation form that is of the first answer and that is determined by the cloud based on the historical information; and the step of presenting the first answer includes: presenting the content of the first answer in the second style.

In this possible implementation, the cloud may further summarize a user preference based on the historical information, and then determine a presentation style of the answer based on the user preference, for example, a strict-oriented style or an anime-orientated style. When the user does not specify the presentation style of the answer, the first answer is generated based on the second style determined based on the historical information. In this way, a degree of matching between the answer presentation form and the user preference can be improved, thereby improving user stickiness.

In a possible implementation, if the first query request conflicts with at least one of the historical query requests, a clarification response is sent to the cloud, where the clarification response indicates the cloud to ignore the historical query request in conflict, or the clarification response indicates the cloud not to ignore the historical query request in conflict.

In this possible implementation, conflict determining may be notified to the client in a manner of a query clarification request after the cloud performs determining, or may be determined by the client. This is not limited in this application. The query clarification request means that content requested by the current first query request conflicts with content requested by one or more historical query requests. For example, one historical query request requests content about rheumatoid arthritis, and the current first query request requests content about swimming. Because there is a high probability that swimming causes rheumatoid arthritis, the two query requests conflict with each other. The cloud may send the query clarification request to the client to notify the user that a conflict exists, and queries whether to ignore the historical query request. In this solution, when the current query request conflicts with the historical query request, the user may be queried in a query clarification manner, instead of making a decision excessively intelligently, so that user experience can be improved.

In a possible implementation, if the clarification response indicates the cloud to ignore the historical query request in conflict, the first answer does not include information associated with the historical query request in conflict.

In this possible implementation, if the user confirms to ignore the historical query request in conflict, the first answer generated by the cloud includes only content corresponding to the first query request, and does not include information associated with the historical query request in conflict. For example, when the first query request is content about swimming, the first answer includes only content about swimming, and does not include related content about rheumatoid arthritis.

In a possible implementation, if the clarification response indicates the cloud not to ignore the historical query request in conflict, the first answer includes conflict prompt information, and the conflict prompt information is information determined based on the historical query request in conflict and the first query request.

In this possible implementation, if the user confirms not to ignore the historical query request in conflict, the first answer generated by the cloud includes information determined based on the historical query request in conflict and the first query request. For example, when the first query request is content about swimming, the generated first answer includes related content that precautions should be taken during swimming to avoid the onset of rheumatic arthritis.

In a possible implementation, the method further includes: determining the corresponding historical information for the first query request in response to selection of a remember mode by the user, where the remember mode is presented on the search and question answering interface in a form of a button.

In this possible implementation, a "remember mode" and a "forget mode" may be configured on the search and question answering interface of the client. If the user selects the forget mode, the client does not send the historical information, and the cloud only needs to determine the corresponding answer based on the first query request. If the user selects the remember mode, the client determines the corresponding historical information for the first query request. In this way, accuracy of guiding the first answer by the historical information can be improved.

A second aspect of this application provides a search and question answering method, including: receiving a first query request and corresponding historical information from a client, where the historical information includes at least one of a historical query request associated with the first query request and a corresponding answer; generating a first answer based on the first query request and the historical information, where content of the first answer is associated with the historical information; and sending the first answer to the client.

In this application, the cloud generates, under guidance of the historical information from the client, the first answer requested by the first query request, and the historical information may reflect a feature of a user who uses the client. The first answer generated in this way better aligns with user perception, improving a degree of matching between the answer and the user.

In a possible implementation, generating the first answer based on the first query request and the historical information includes: rewriting the first query request based on the historical information, to obtain a second query request; and generating the first answer based on the second query request and the historical information.

In this possible implementation, the first query request may not completely comply with a specification, and it is difficult for machine identification. The cloud may first rewrite the first query request with reference to the historical information, so that the machine can well understand content that the user wants to search for by entering the first query request. In this way, efficiency and quality of search and question answering can be improved.

In a possible implementation, the first query request further includes a first style selected by a user, and the first style indicates a presentation form of the first answer; and the step of generating the first answer based on the second query request and the historical information includes: determining the content of the first answer based on the second query request and the historical information, and merging the first style with the content of the first answer, to obtain the first answer.

In this possible implementation, the cloud combines the first style with the content of the first answer to obtain the first answer. Then, after receiving the first answer, the client presents the content of the first answer in the first style. In this way, the content of the answer is presented based on the style selected by the user, so that a degree of matching between an answer presentation form and a user preference can be improved, thereby improving user stickiness.

In a possible implementation, the step of generating the first answer based on the second query request and the historical information includes: determining a style preference of a user based on the historical information, and determining a second style based on the style preference, where the second style indicates a presentation form of the first answer; and determining the content of the first answer based on the second query request and the historical information, and merging the second style with the content of the first answer, to obtain the first answer.

In this possible implementation, the cloud may further summarize a user preference based on the historical information, and then determine a presentation style of the answer based on the user preference, for example, a strict-oriented style or an anime-orientated style. When the user does not specify the presentation style of the answer, the first answer is generated based on the second style determined based on the historical information. In this way, a degree of matching between the answer presentation form and the user preference can be improved, thereby improving user stickiness.

In a possible implementation, the method further includes: determining whether the first query request conflicts with the historical query request; if the first query request conflicts with the historical query request, sending a query clarification request to the client, where the query clarification request indicates that the first query request conflicts with at least one historical query request, and indicates whether to ignore the historical query request in conflict; and receiving a clarification response from the client, where the clarification response indicates to ignore the historical query request in conflict or not to ignore the historical query request in conflict.

In this possible implementation, when the current query request conflicts with the historical query request, the user may be queried in a query clarification manner, instead of making a decision excessively intelligently, so that user experience can be improved.

In a possible implementation, if the clarification response indicates the cloud to ignore the historical query request in conflict, before the first answer is generated based on the first query request and the historical information, the historical query request in conflict and a corresponding answer are deleted from the historical information; and correspondingly, the first answer does not include information associated with the historical query request in conflict.

In a possible implementation, if the clarification response indicates the cloud not to ignore the historical query request in conflict, correspondingly, the first answer includes conflict prompt information, and the conflict prompt information is information determined based on the historical query request in conflict and the first query request.

A third aspect of this application provides a client, configured to perform the method in any one of the first aspect or the possible implementations of the first aspect. Specifically, the client includes modules or units configured to perform the method in any one of the first aspect or the possible implementations of the first aspect, for example, a receiving unit, a display unit, and a sending unit.

A fourth aspect of this application provides a cloud apparatus, configured to perform the method in any one of the second aspect or the possible implementations of the second aspect. Specifically, the cloud apparatus includes modules or units configured to perform the method in any one of the second aspect or the possible implementations of the second aspect, for example, a processing unit, a sending unit, and a receiving unit.

A fifth aspect of this application provides a client, including a transceiver, a processor, and a memory. The transceiver and the processor are coupled to the memory. The memory is configured to store a program or instructions. When the program or the instructions are executed by the processor, a cloud apparatus is enabled to perform the method in any one of the first aspect or the possible implementations of the first aspect.

A sixth aspect of this application provides a cloud apparatus. The cloud apparatus may include at least one processor, a memory, and a communication interface. The processor is coupled to the memory and the communication interface. The memory is configured to store instructions, the processor is configured to execute the instructions, and the communication interface is configured to communicate with another network element under control of the processor. When the instructions are executed by the processor, the processor is enabled to perform the method in any one of the second aspect or the possible implementations of the second aspect.

A seventh aspect of this application provides a chip system. The chip system includes one or more interface circuits and one or more processors. The interface circuit is interconnected to the processor through a line. The interface circuit is configured to: receive a signal from a memory of a client, and send the signal to the processor, where the signal includes computer instructions stored in the memory. When the processor executes the computer instructions, the client performs the method in any one of the first aspect or the possible implementations of the first aspect.

An eighth aspect of this application provides a chip system. The chip system includes one or more interface circuits and one or more processors. The interface circuit and the processor are interconnected through a line. The interface circuit is configured to: receive a signal from a memory of a cloud apparatus, and send the signal to the processor. The signal includes computer instructions stored in the memory. When the processor executes the computer instructions, the cloud apparatus performs the method in any one of the second aspect or the possible implementations of the second aspect.

A ninth aspect of this application provides a computer-readable storage medium, storing a computer program or instructions. When the computer program or the instructions are run on a computer device, the computer device is enabled to perform the method in any one of the first aspect or the possible implementations of the first aspect.

A tenth aspect of this application provides a computer-readable storage medium, storing a computer program or instructions. When the computer program or the instructions are run on a computer device, the computer device is enabled to perform the method in any one of the second aspect or the possible implementations of the second aspect.

An eleventh aspect of this application provides a computer device program product, where the computer device program product includes computer device program code. When the computer device program code is executed on a computer device, the computer device is enabled to perform the method in any one of the first aspect or the possible implementations of the first aspect.

A twelfth aspect of this application provides a computer device program product, where the computer device program product includes computer device program code. When the computer device program code is executed on a computer device, the computer device is enabled to perform the method in any one of the second aspect or the possible implementations of the second aspect.

A thirteenth aspect of this application provides a search and question answering system, where the search and question answering system includes a cloud apparatus and a client, the client is configured to perform the method in any one of the first aspect or the possible implementations of the first aspect, and the cloud apparatus is configured to perform the method in any one of the second aspect or the possible implementations of the second aspect.

For technical effects brought by any one of the third aspect to the thirteenth aspect or the possible implementations of the third aspect to the thirteenth aspect, refer to the technical effects brought by any one of the first aspect or the possible implementations of the first aspect. Details are not described herein again.

### BRIEF DESCRIPTION OF DRAWINGS

FIG. 1A is a diagram of an architecture of a search and question answering system according to an embodiment of this application;
FIG. 1B is a diagram of an architecture of a search and question answering system according to an embodiment of this application;
FIG. 2A is a diagram of a structure of a terminal device according to an embodiment of this application;
FIG. 2B is a diagram of a structure of a cloud apparatus according to an embodiment of this application;
FIG. 3 is a diagram of an embodiment of a search and question answering method according to an embodiment of this application;
FIG. 4 is a diagram of an example of a question answering and search page of a client according to an embodiment of this application;
FIG. 5 is a diagram of an architecture of search and question answering according to an embodiment of this application;
FIG. 6 is a diagram of another architecture of search and question answering according to an embodiment of this application;
FIG. 7 is a diagram of another example of a question answering and search page of a client according to an embodiment of this application;
FIG. 8 is a diagram of another architecture of search and question answering according to an embodiment of this application;
FIG. 9 is a diagram of another architecture of search and question answering according to an embodiment of this application;
FIG. 10 is a diagram of another example of a question answering and search page of a client according to an embodiment of this application;
FIG. 11 is a diagram of a structure of a client according to an embodiment of this application; and
FIG. 12 is a diagram of a structure of a cloud apparatus according to an embodiment of this application.

### DESCRIPTION OF EMBODIMENTS

The following describes embodiments of this application with reference to the accompanying drawings. It is clear that the described embodiments are merely some rather than all of embodiments of this application. A person of ordinary skill in the art may know that with development of technologies and emergence of new scenarios, the technical solutions provided in embodiments of this application are also applicable to resolving similar technical problems.

In the specification, claims, and accompanying drawings of this application, the terms "first", "second", and the like are intended to distinguish between similar objects but do not necessarily indicate a specific order or sequence. It should be understood that the data termed in such a way are interchangeable in proper circumstances, so that embodiments described herein can be implemented in an order other than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

Embodiments of this application provide a search and question answering method, to improve a degree of matching between an answer and a user. This application further provides a corresponding apparatus, a computer-readable storage medium, a computer program product, and the like. The following is described in detail separately.

For ease of understanding, the following briefly describes technical terms used in embodiments of this application.
1. Query request (Query): query words entered by a user in a search box.
2. Information retrieval: Select a document candidate set most related to the query request from a large-scale webpage document library (which may be a 100 billion-scale document library).
3. Search and question answering system: generally a system that answers a user question based on document information after searching for related documents.
4. Dialog-based search and question answering system: a system that adds a multi-round dialog capability to the search and question answering system to understand the context, thereby implementing a multi-round continuous question answering function.
5. Answer generation: Generate an answer to a user question in a particular manner or model.
6. Retrieval-based answer generation: Retrieve a built question and answer pair library and use a query request to match the most related question or answer in the question and answer pair library, to obtain an answer.
7. Reading comprehension-based answer generation: By retrieving related webpages or documents, understand document content, and integrate the document content into an answer. This process may be generally classified into an extractive type and a generative type. The extractive type features that the answer comes from webpage fragments, and for the generative type, the answer does not necessarily come from webpage document fragments, and further processing and polishing are performed.
8. Large model generation: After training, a large model internalizes knowledge into model parameters, enabling it to directly generate an answer corresponding to a user query. When the large model is used to generate an answer, a mainstream method that leverages a capability of the large model may be used to guide, by providing a prompt (prompt) for the large model, the large model to generate corresponding content.
9. Historical information: a query request sent by a client historically and/or an answer corresponding to the query request.
10. Historical information compression and perception: Historical information of a user is highly compressed to save key information and enable a model to have a capability of perceiving the information.
11. User preference: rational and preferential selection made by a user when considering commodities and services, and a comprehensive result of user cognition, psychological feeling, and rational economic trade-off.
12. Query clarification: Ask related questions based on a query provided by a user and interact with the user in a form of clarification or rhetorical questions, to better understand an intention of the user.

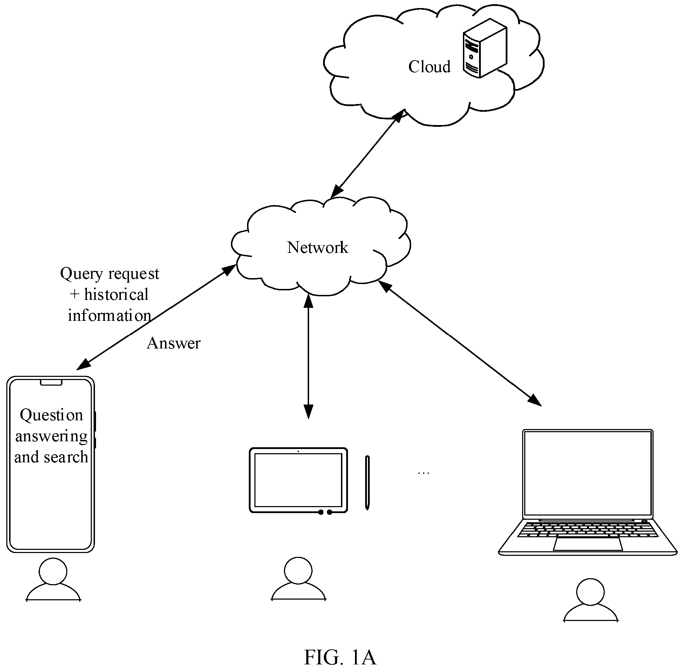

FIG. 1A is a diagram of an architecture of a search and question answering system according to an embodiment of this application.

As shown in FIG. 1A, the search and question answering system provided in this embodiment of this application includes a cloud and a plurality of clients, and the cloud may communicate with the plurality of clients through a network. The cloud may be software or a service of a cloud platform, or may be software or a service deployed on a node in a network, such as an edge node. The cloud may run on an independent physical machine or on a virtualized resource. The client may be a terminal device, or may be an application. For example, the application is run on the terminal device for use by a user. The application may be a plurality of question answering or dialog applications such as a search engine, an intelligent voice assistant, and an agentic social tool.

The client may send a query request and historical information related to the query request to the cloud. A cloud apparatus of the cloud may generate a corresponding answer based on the query request query and the historical information, and then send the answer to the client. The client receives and presents the answer.

The historical information may be at least one of historical query requests sent by a user by using a same terminal device or a same user account and answers respectively corresponding to the historical query requests. In other words, the historical information may be only a historical query request, or may be only an answer corresponding to the historical query request, or may include both a historical query request and a corresponding answer.

The cloud apparatus of the cloud in FIG. 1A may be a worker node or a scheduling node in a cloud system. After the scheduling node receives a query request from the client, the scheduling node may perform a corresponding search and question answering process. Alternatively, the scheduling node may allocate the query request to one or more worker nodes in the cloud system, and the one or more worker nodes execute a corresponding search and question answering process.

A function of the scheduling node may be implemented by using software or hardware.

The scheduling node is used as an example of a software functional unit, and the scheduling node may include code run on a computing instance. The computing instance may include at least one of a physical host (computing device), a virtual machine, and a container. Further, there may be one or more computing instances. For example, the scheduling node may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed on a same virtual private cloud (virtual private cloud, VPC), or may be distributed on a plurality of VPCs. Usually, one VPC is disposed in one region. A communication gateway needs to be disposed in each VPC for communication between two VPCs in a same region or cross-region communication between VPCs in different regions. VPCs are interconnected through the communication gateway.

The scheduling node is used as an example of a hardware functional unit, and the scheduling node may include at least one computing device such as a server. Alternatively, the scheduling node may be a device implemented by using an application-specific integrated circuit (application-specific integrated circuit, ASIC) or a programmable logic device (programmable logic device, PLD), or the like. The PLD may be implemented by using a complex programmable logical device (complex programmable logical device, CPLD), a field-programmable gate array (field-programmable gate array, FPGA), a generic array logic (generic array logic, GAL), or any combination thereof.

A plurality of computing devices included in the scheduling node may be distributed in a same region, or may be distributed in different regions. The plurality of computing devices included in the scheduling node may be distributed in a same AZ, or may be distributed in different AZs. Similarly, the plurality of computing devices included in the scheduling node may be distributed in a same VPC, or may be distributed in a plurality of VPCs. The plurality of computing devices may be any combination of the following computing devices: a server, an ASIC, a PLD, a CPLD, an FPGA, a GAL, and the like.

The worker node may be a physical machine, or may be a computing instance such as a virtual machine (virtual machine, VM) or a container (container). The worker node may include one or more central processing units (central processing unit, CPU), graphics processing units (graphics processing unit, GPU), and the like. The worker node may alternatively be a CPU or a GPU.

The client may be a terminal device. The terminal device, also referred to as user equipment (user equipment, UE), a mobile station (mobile station, MS), a mobile terminal (mobile terminal, MT), or the like, is a device that includes a wireless communication function (providing a user with voice and/or data connectivity), for example, a handheld device with a wireless connection function. Currently, some examples of the terminal device are a mobile phone (mobile phone), a tablet computer, a notebook computer, a palmtop computer, a notebook computer, a wireless router, a mobile Internet device (mobile Internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in the Internet of Vehicles, a wireless terminal in remote medical surgery (remote medical surgery), a wireless terminal in a smart grid (smart grid), a wireless terminal in transportation safety (transportation safety), a wireless terminal in a smart city (smart city), or a wireless terminal in a smart home (smart home). For example, the wireless terminal in the Internet of Vehicles may be an in-vehicle device, an entire vehicle device, an in-vehicle module, a vehicle, or the like. The wireless terminal in industrial control may be a robot, or the like. For example, the wireless terminal in self driving may be an unmanned aerial vehicle. The terminal device may be a device that runs an Android system, an iOS system, a Windows system, or another system. An application that needs to perform rendering on an application scenario to obtain a two-dimensional image may run in the terminal device, for example, a game application, a lock screen application, or a map application.

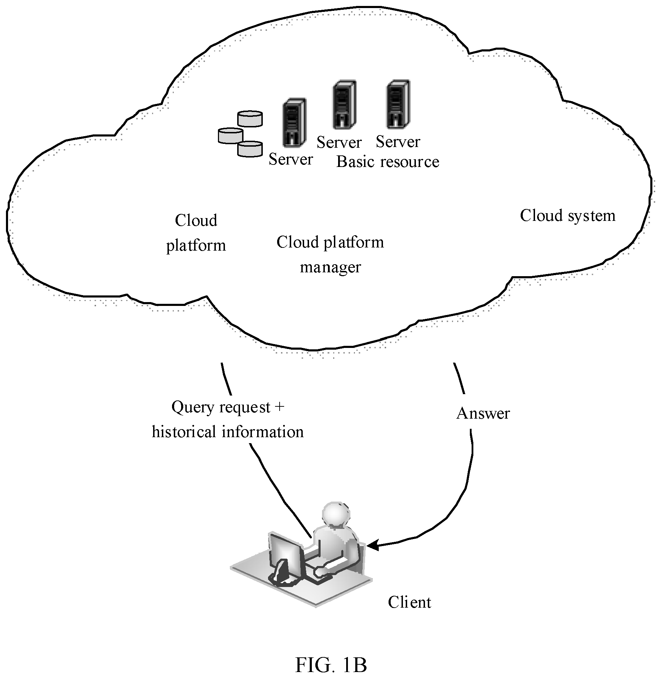

The cloud in FIG. 1A may be located in the cloud system. For an architecture of the cloud system, refer to FIG. 1B for understanding. As shown in FIG. 1B, the cloud system includes a cloud platform and a basic resource. The cloud platform includes a cloud platform manager, and the scheduling node described above may be a cloud platform manager in FIG. 1B. The basic resource may include a plurality of servers, and each server may be one worker node, or each server may include a plurality of worker nodes.

A worker node in FIG. 1B may be a computing device card or a virtual machine (virtual machine, VM). The computing device card may be at least one of a central processing unit (central processing unit, CPU), a graphics processing unit (graphic processing unit GPU), and a neural-network processing unit (neural processing unit, NPU).

The cloud platform manager maintains or periodically collects information about each worker node in the basic resource, for example, information such as a resource use status (resource usage or a resource idle rate) of each worker node. The information may be used as auxiliary decision-making information when a query request is allocated.

The cloud platform manager may receive a query request from the client, and then the cloud platform manager may execute a corresponding search and question answering process. The cloud platform manager may alternatively allocate the query request to one or more worker nodes in the cloud system, and the one or more worker nodes execute the corresponding search and question answering process.

After the worker nodes complete search and question answering, the cloud platform manager may return an answer to the client.

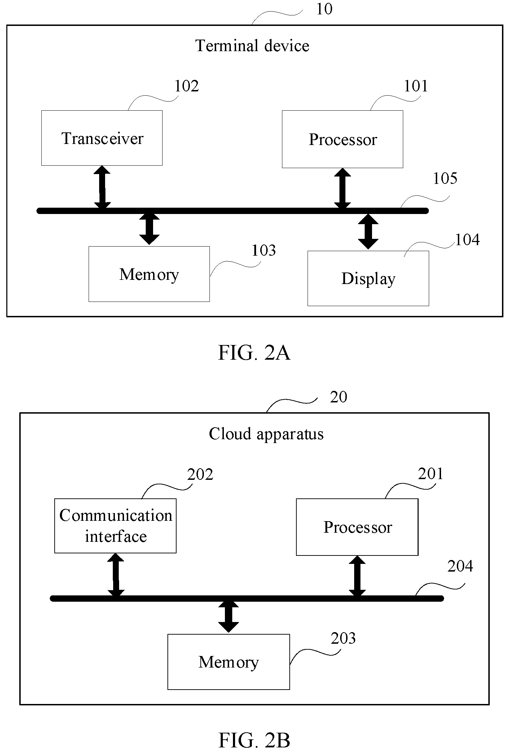

For example, the client is a terminal device. For a structure of the terminal device provided in this embodiment of this application, refer to FIG. 2A for understanding, and for a structure of the cloud apparatus of the cloud, refer to FIG. 2B for understanding.

FIG. 2A is a diagram of a structure of a terminal device according to an embodiment of this application. As shown in FIG. 2A, the terminal device may include a processor 101, a transceiver 102, a memory 103, a display 104, and a bus 105. The processor 101, the transceiver 102, the memory 103, and the display 104 are connected to each other through the bus 105. In this embodiment of this application, the processor 101 is configured to control and manage an action of the terminal device 10. For example, the processor 101 is configured to respond to a process in which a user enters a query request. The transceiver 102 is configured to support communication of the terminal device 10. For example, the transceiver 102 may perform steps of sending a query request and receiving an answer. The memory 103 is configured to store program code and data of the terminal device 10, and the display 104 is configured to display an answer.

The processor 101 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination that implements a computing function, for example, a combination including one or more microprocessors, or a combination of a digital signal processor and a microprocessor. The bus 105 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one thick line is used to represent the bus in FIG. 2A, but this does not mean that there is only one bus or only one type of bus.

The foregoing describes the structure of the terminal device in FIG. 2A. The following describes a structure of the cloud apparatus with reference to FIG. 2B.

FIG. 2B is a diagram of a possible logical structure of a cloud apparatus according to an embodiment of this application. As shown in FIG. 2B, the cloud apparatus 20 provided in this embodiment of this application includes a processor 201, a communication interface 202, a memory 203, and a bus 204. The processor 201, the communication interface 202, and the memory 203 are interconnected through the bus 204. In this embodiment of this application, the processor 201 is configured to control and manage an action of the cloud apparatus 20. For example, the processor 201 is configured to generate an answer based on a query request and historical information. The communication interface 202 is configured to support the cloud apparatus 20 in performing communication. For example, the communication interface 202 may perform a step of receiving a query request and historical information, and a step of sending an answer. The memory 203 is configured to store program code and data of the cloud apparatus 20.

The processor 201 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination that implements a computing function, for example, a combination including one or more microprocessors, or a combination of a digital signal processor and a microprocessor. The bus 204 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one thick line is used to represent the bus in FIG. 2B, but this does not mean that there is only one bus or only one type of bus.

The following describes a search and question answering method provided in an embodiment of this application. Content executed by a cloud in the method may be executed by the cloud, or may be executed by a component (for example, a processor, a chip, or a chip system) of the cloud. Content executed by a client may be executed by the client, or may be executed by a component (for example, a processor, a chip, or a chip system) of the client.

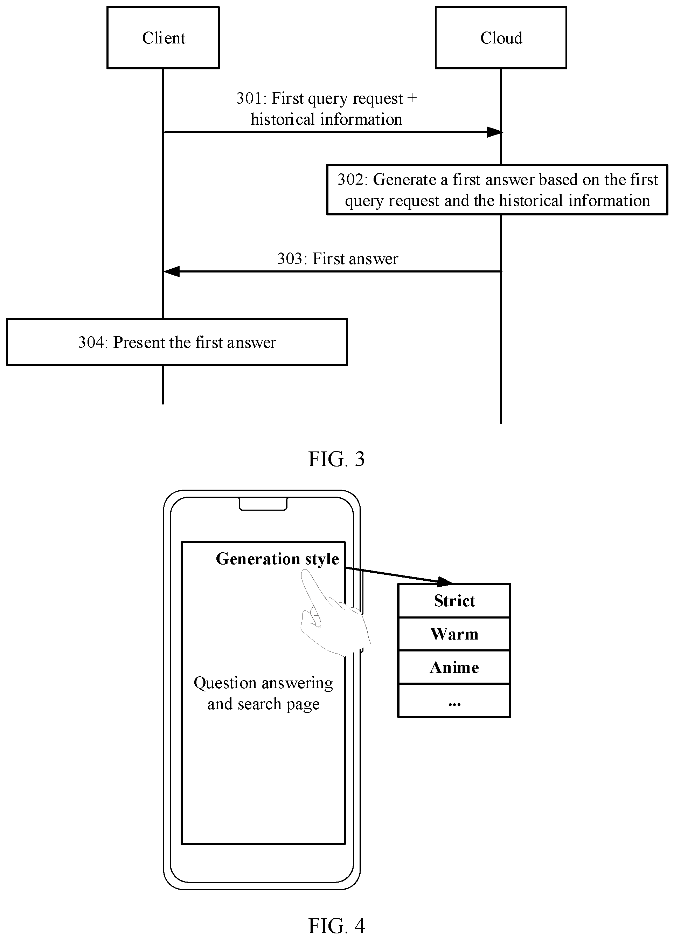

FIG. 3 is a diagram of an embodiment of a search and question answering method according to an embodiment of this application.

As shown in FIG. 3, an embodiment of the search and question answering method provided in this embodiment of this application includes the following steps.

301: A client sends a first query request and corresponding historical information to a cloud. Correspondingly, the cloud receives the first query request and the corresponding historical information from the client.

The historical information of the first query request includes at least one of a historical query request associated with the first query request and a corresponding answer.

302: The cloud generates a first answer based on the first query request and the historical information.

Content of the first answer is associated with the historical information of the first query request.

A process of generating the first answer in step 302 may be retrieval-based answer generation, reading comprehension-based answer generation, or generation by using a large model. For descriptions of the several answer generation manners, refer to the foregoing descriptions of the technical terms for understanding. Regardless of which answer generation manner is used, the historical information corresponding to the first query request is used to guide generation of the first answer in an answer generation process.

303: The cloud sends the first answer to the client. Correspondingly, the client receives the first answer from the cloud.

304: The client presents the first answer.

In this application, the first answer is generated on the cloud under guidance of the historical information from the client, and the historical information may reflect a feature of a user who uses the client. The first answer generated in this way better aligns with user perception, and is a high-quality answer that meets personality of the user, so that a degree of matching between the answer and the user can be improved.

In the foregoing step 304, the content of the first answer may be presented in a particular style. The style in which the content of the first answer is presented may be selected by the user on the client, or may be determined by the cloud based on the historical information. This is separately described below.
1. The user selects the style.

The first query request further includes a first style selected by the user, and the first style indicates a presentation form of the first answer. In this case, the foregoing step 304 may be presenting the content of the first answer in the first style.

A style button may be presented on the client. As shown in FIG. 4, a "generation style" button may be configured on a search and question answering page. When the "generation style" button is tapped, options of a plurality of associated styles may be displayed on a same screen, for example, a strict style, a warm style, and an anime style. Alternatively, only a plurality of styles may be displayed, and the "generation style" button is no longer displayed. The user may select an answer presentation style on the style options. In this way, when the client sends the first query request, the first style is carried, and the cloud combines the first style with the content of the first answer to obtain the first answer. Then, after receiving the first answer, the client presents the content of the first answer in the first style. Optionally, after the user selects the first style, the client may not carry the first style in the first query request, but after receiving the content of the first answer, adjusts the content of the first answer based on the first style and then presents the adjusted content.

In this application, the content of the answer is presented based on the style selected by the user, so that a degree of matching between an answer presentation form and a user preference can be improved, thereby improving user stickiness.

2. The cloud determines the style.

The first answer includes a second style, and the second style is a presentation form that is of the first answer and that is determined by the cloud based on the historical information. In this case, the foregoing step 304 may include presenting the content of the first answer in the second style.

The cloud may further summarize a user preference based on the historical information, and then determine a presentation style of the answer based on the user preference, for example, a strict-oriented style or an anime-orientated style. When the user does not specify the presentation style of the answer, the first answer is generated based on the second style determined based on the historical information. In this way, a degree of matching between the answer presentation form and the user preference can be improved, thereby improving user stickiness.

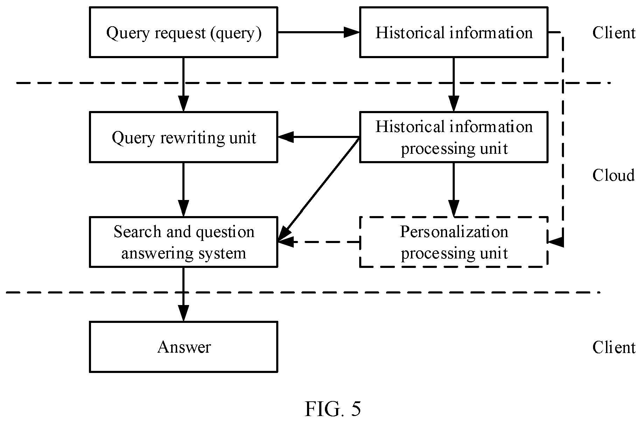

For the foregoing processing procedure of search and question answering in this embodiment of this application, refer to a diagram of a system architecture in FIG. 5 for understanding. As shown in FIG. 5, the system architecture of search and question answering includes the client and the cloud.

The client may respond to a query request (query) entered by the user, and determine corresponding historical information for the query request. It is considered that the client may store a large amount of historical information, and many pieces of historical information may be irrelevant to the query request and have no reference value. Therefore, the client filters locally stored historical information with reference to the query request. The process may be as follows: The client parses the first query request, to retrieve the historical information from a plurality of historical query requests and corresponding answers that are stored on the client, where a similarity between the historical information and the first query request is greater than a first threshold. A principle of filtering may be determining, by using a cosine similarity or another distance calculation method, the historical information related to the first query request, for example, historical information whose similarity is greater than the first threshold. Then the client sends both the query request and the historical information obtained through filtering to the cloud.

The cloud may include a query rewriting unit, a historical information processing unit, and a search and question answering system, and the cloud may further include a personalization processing unit. The query rewriting unit may rewrite a query, and may rewrite a non-standard query into a query that can be understood by a machine. For example, a query that is entered by the user on the client last time is "How is the weather of City A", and a query entered this time is "What about City B?" The query rewriting unit may rewrite the current query "What about City B?" into "How is the weather of City B" based on "How is the weather of City A?" extracted from the historical information by the historical information processing unit.

The query rewriting unit transmits a rewritten query to the search and question answering system. In addition, the historical information processing unit may input information that is extracted from the historical information and that is strongly related to the query request into the search and question answering system, or transmit the information to the personalization processing unit. For example, if the current query queries "How is the weather of City B", the information strongly related to the current query request may be precautions for traveling to City B, tourist attractions of City B, hotels of City B, and other information.

The personalization processing unit may abstract a user profile from the historical information or the information transmitted by the historical information processing unit, determine a user preference, determine an answer presentation style based on the user preference, and transmit the style to the search and question answering system.

When generating an answer for the rewritten query, the search and question answering system generates the answer with reference to the information transmitted by the historical information processing unit and the answer presentation style transmitted by the personalization processing unit. Then, the cloud sends the generated answer to the client.

The client presents the received answer.

This process describes a case in which the cloud determines the answer presentation style. If the user sets the answer presentation style on the client, the personalization processing unit on the cloud may not transmit the determined style to the search and question answering system.

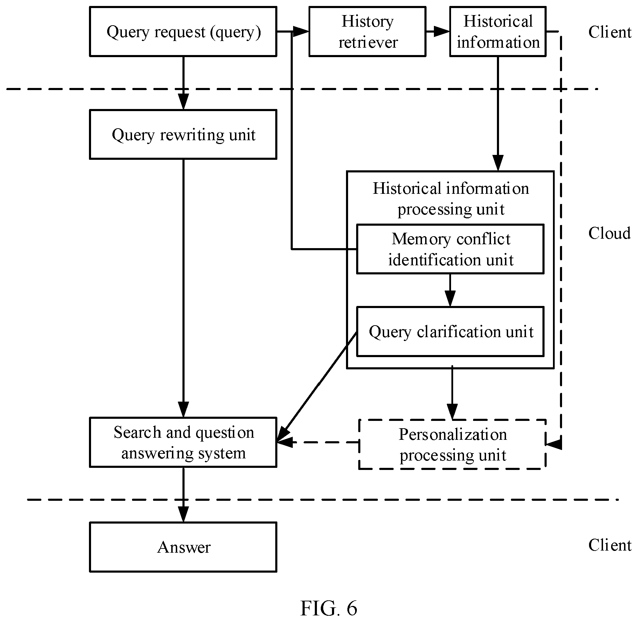

As shown in FIG. 6, the client may include a history retriever, and the historical information processing unit in FIG. 5 may include a memory conflict identification unit and a query clarification unit.

The history retriever may retrieve, from the historical information and context, information that meets the current query (the first query request), and then transmit the historical information that meets the current query to the cloud.

The memory conflict identification unit may determine whether the current query (the first query request, or may be a rewritten second query request, and the following uses the first query request as an example for description) conflicts with a user history, and if a conflict exists, notify the query clarification unit.

The query clarification unit may send a query clarification request to the client, where the query clarification request indicates that the first query request conflicts with at least one historical query request, and indicates whether to ignore the historical query request in conflict. After receiving the query clarification request, the client sends a clarification response to the cloud, where the clarification response indicates to ignore the historical query request in conflict or not to ignore the historical query request in conflict. Based on the clarification response, the query clarification unit ignores the historical query request in conflict, or does not ignore the historical query request in conflict.

The query clarification unit transmits the clarification response to the search and question answering system, and the search and question answering system further generates a corresponding answer.

The query clarification request means that content requested by the current first query request conflicts with content requested by one or more historical query requests. For example, one historical query request requests content about rheumatoid arthritis, and the current first query request requests content about swimming. Because there is a high probability that swimming causes rheumatoid arthritis, the two query requests conflict with each other.

The cloud may send the query clarification request to the client to notify the user that a conflict exists, and queries whether to ignore the historical query request. If the first query request conflicts with at least one of the historical query requests, the client sends a clarification response to the cloud, where the clarification response indicates the cloud to ignore the historical query request in conflict, or the clarification response indicates the cloud not to ignore the historical query request in conflict.

If the clarification response indicates the cloud to ignore the historical query request in conflict, the first answer does not include information associated with the historical query request in conflict. In other words, if the user confirms to ignore the historical query request in conflict, the first answer generated by the cloud includes only content corresponding to the first query request, and does not include information associated with the historical query request in conflict. For example, when the first query request is content about swimming, the first answer includes only content about swimming, and does not include related content about rheumatoid arthritis.

If the clarification response indicates the cloud not to ignore the historical query request in conflict, the first answer includes conflict prompt information, and the conflict prompt information is information determined based on the historical query request in conflict and the first query request. In other words, if the user confirms not to ignore the historical query request in conflict, the first answer generated by the cloud includes information determined based on the historical query request in conflict and the first query request. For example, when the first query request is content about swimming, the generated first answer includes related content that precautions should be taken during swimming to avoid the onset of rheumatic arthritis.

Based on the solution provided in this embodiment of this application, when the current query request conflicts with the historical query request, the user may be queried in a query clarification manner, instead of making a decision excessively intelligently, so that user experience can be improved.

In the content described in FIG. 6, the history retriever is located on the client, and the history retriever may retrieve, from the large amount of historical information stored on the client, the historical information associated with the current first query request, and send the historical information to the cloud. In another possible embodiment, the history retriever may alternatively be located on the cloud. If the user stores all queried related historical information on the cloud, the history retriever located on the cloud may retrieve related historical information based on the first query request, and then perform search and question answering. Especially, when the user has a plurality of terminal devices, the user may log in to applications on different terminal devices by using a same user account, and historical information queried for these terminal devices may all be stored on the cloud by using the user account in an association manner. In this way, when the user uses a terminal device, the history retriever on the cloud may filter the historical information of the plurality of different terminal devices of the user, to obtain historical information related to the current query request, and then perform a search and question answering process.

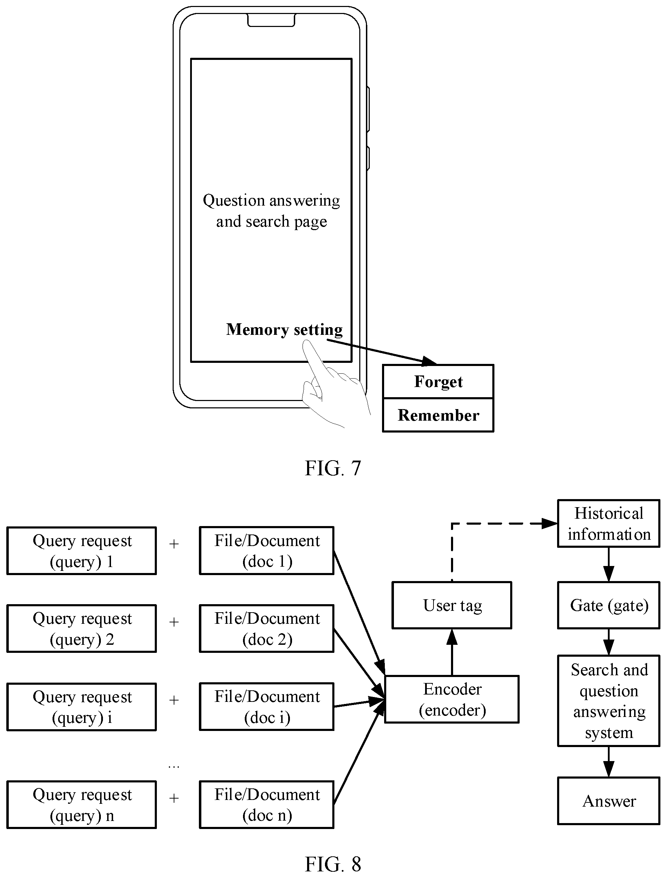

All the content described above is a process of generating the answer corresponding to the query request based on the historical information. Whether the historical information is used in the process of generating the answer may be set on the client. As shown in FIG. 7, a "memory setting" function item may be configured on the search and question answering page of the client. When the user taps the "memory setting" function item, two modes: "forget" and "remember" are displayed. If the user does not want the historical information to participate in answer generation, the user may select the "forget" mode. If the user wants the historical information to participate in answer generation, the user may select the "remember" mode. If the user selects the remember mode, the client generates the corresponding historical information for the query request.

The cloud may perform gating management based on "memory setting" of the client, and determine whether to use the historical information to guide answer generation. A gating management mechanism may be configured on the historical information processing unit.

The historical information processing unit may have the following functions:
1. Historical information compression and perception: A user preference is summarized based on the historical information of the user, and a representative query is filtered out as a user profile and stored on the cloud. The representative query (user profile) may be used as a retrieval data source of the history retriever, and can greatly compress information capacity and save key information of the user preference.
   Through multi-task joint learning, as shown in FIG. 8, based on historical query requests (query) and retrieval files (doc), the query requests and text features are captured by using an encoder (encoder) to generate a user tag. In the memory setting, a gating mechanism (gate) is used to determine whether to use the historical information to guide answer generation. If it is determined, through "memory setting", not to use the historical information (the forget mode), an answer is directly generated by using the search and question answering system (generator). If it is determined, through "memory setting", to use the historical information (the remember mode), the historical information is transmitted to the search and question answering system through the "gate (gate)", and the search and question answering system generates an answer based on the historical information.
2. Historical memory behavior conflict clarification: The memory conflict identification unit compares the current query with a historical profile. If the current query is inconsistent with a historical memory behavior (for example, the current query is used by another person), query clarification may be performed (for a process of query clarification, refer to the description in FIG. 6 for understanding), to avoid excessive intelligence.
3. Interpretability of historical memory: Mark citation of the historical memory in reference and citation, to explain a partial reason for answer generation.

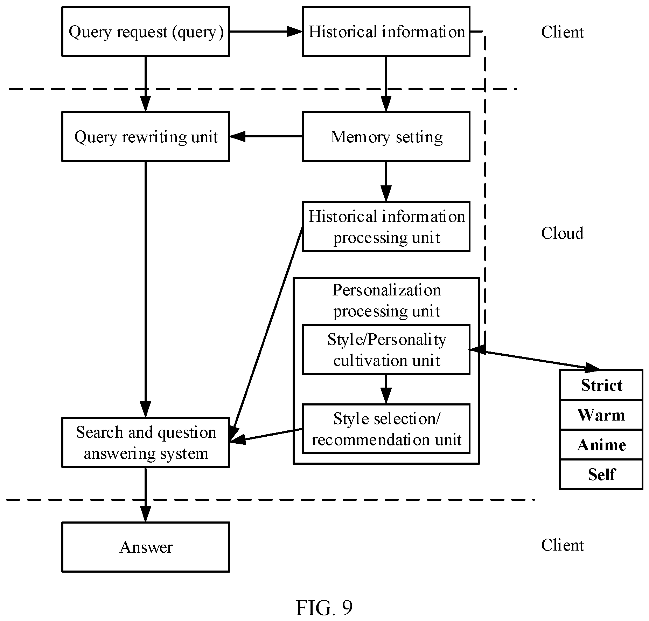

In addition, the personalization processing unit in this embodiment of this application may summarize a user style, and cultivate a style personality. In this way, the search and question answering system may generate an answer based on a user preference style. The process may be understood with reference to FIG. 9. As shown in FIG. 9, the personalization processing unit includes a style/personality cultivation unit and a style selection/recommendation unit. If the cloud determines, through the memory setting, that the historical information needs to be used to generate the answer, the style/personality cultivation unit may train a base (base) model based on multi-style texts, update parameters through incremental training on data of the historical information of the user, and continuously reshape and cultivate a "self" style. The style/personality cultivation unit may be a neural network model, and may summarize one or more styles based on the historical information, for example, one or more possible styles such as an anime style, a warm style, a strict style, or a self style, as shown in FIG. 9. Then, the style selection/recommendation unit may transmit the user preference style summarized by the style/personality cultivation unit to the search and question answering system. In this way, the search and question answering system can generate the answer based on the user preference style.

The foregoing describes a process in which the cloud generates the answer based on the historical information. The following describes a display page on a client side by using an example with reference to the search and question answering page of the client.

It should be noted that, to facilitate understanding of impact of the historical information on the current query, both an answer to a historical query and an answer to the current query are displayed on one page. In an actual scenario, the content may not be displayed on one page, or may be certainly displayed on one page.

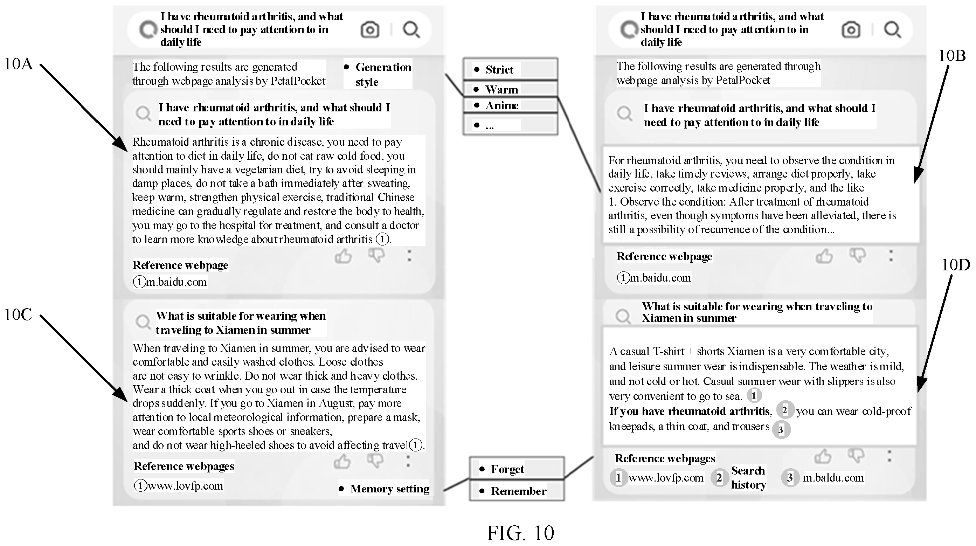

As shown in FIG. 10, on the question answering and search page of the client, a user may search for "I have rheumatoid arthritis, and what should I need to pay attention to in daily life" in history. If the user does not select a generation style, an answer of part 10A in FIG. 10 is obtained: "Rheumatoid arthritis is a chronic disease, you need to pay attention to diet in daily life, do not eat raw cold food, you should mainly have a vegetarian diet, try to avoid sleeping in damp places, do not take a bath immediately after sweating, keep warm, strengthen physical exercise, traditional Chinese medicine can gradually regulate and restore the body to health, you may go to the hospital for treatment, and consult a doctor to learn more knowledge about rheumatoid arthritis".

If the user selects a "strict" style, an answer of part 10B in FIG. 10 may be obtained: "For rheumatoid arthritis, you need to observe the condition in daily life, take timely reviews, arrange diet properly, take exercise correctly, take medicine properly, and the like".
1. Observe the condition: After treatment of rheumatoid arthritis, even though symptoms have been alleviated, there is still a possibility of recurrence of the condition...(not all is displayed in FIG. 10).

In addition, FIG. 10 does not completely display detailed content about timely reviews, proper diet arrangement, correct exercise, and proper medicine use. More content is displayed in an actual search and question answering scenario.

The query request entered by the user for current search and question answering is "What is suitable for wearing when traveling to Xiamen in summer", and if the user selects the "forget" mode in the "memory setting" function item, an answer of part 10C in FIG. 10 is obtained: "When traveling to Xiamen in summer, you are advised to wear comfortable and easily washed clothes. Loose clothes are not easy to wrinkle. Do not wear thick and heavy clothes. Wear a thick coat when you go out in case the temperature drops suddenly. If you go to Xiamen in August, pay more attention to local meteorological information, prepare a mask, wear comfortable sports shoes or sneakers, and do not wear high-heeled shoes to avoid affecting travel".

If the user selects the "remember" mode, and selects the "anime" style, or the user does not select the "anime" style, but the cloud obtains the anime style based on historical information related to rheumatoid arthritis that is previously queried, an answer of part 10D in FIG. 10 is obtained: "A casual T-shirt + shorts Xiamen is a very comfortable city, and leisure summer wear is indispensable. The weather is mild, and not cold or hot. Casual summer wear with slippers is also very convenient to go to sea. If you have rheumatoid arthritis, you can wear cold-proof kneepads, a thin coat, and trousers". "If you have rheumatoid arthritis, you can wear cold-proof kneepads, a thin coat, and trousers" is added to the answer to the current query based on the historical information about the previous query "I have rheumatoid arthritis, and what should I need to pay attention to in daily life".

In the process of user preference oriented search and question answering provided in this embodiment of this application, personalized style selection of the user and historical memory selection can be customized, and a "heartfelt" answer and a personalized answer of a corresponding style may be generated respectively by using an answer generation model and a sparse activation style text generation model that perceive historical information. A user preference orientated personalized search and question answering experience is provided through customized personalized settings and a user personalized style that is cultivated by using the historical information of the user.

The foregoing describes the search and question answering system and the search and question answering method. The following describes related apparatuses with reference to the accompanying drawings.

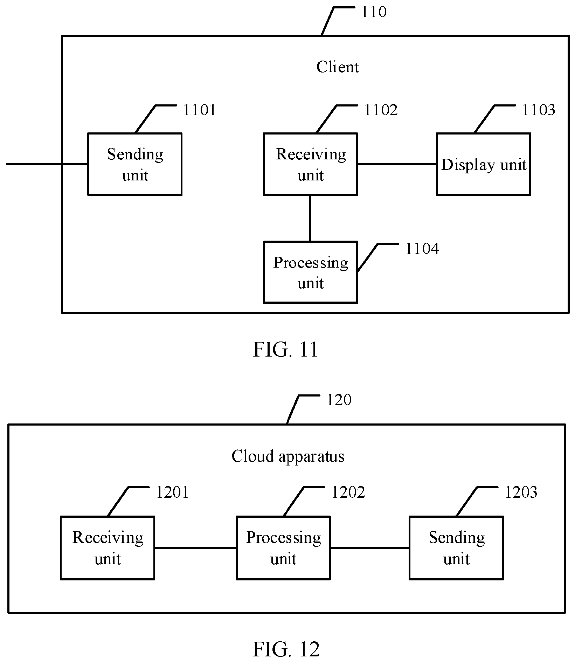

As shown in FIG. 11, a structure of a client 110 provided in an embodiment of this application includes:
a sending unit 1101, configured to send a first query request and corresponding historical information to a cloud, where the historical information includes at least one of a historical query request associated with the first query request and a corresponding answer;
a receiving unit 1102, configured to receive a first answer from the cloud, where content of the first answer is associated with the historical information; and
a display unit 1103, configured to present the first answer.

In this application, the first answer is generated on the cloud under guidance of the historical information from the client, and the historical information may reflect a feature of a user who uses the client. The first answer generated in this way better aligns with user perception, and is a high-quality answer that meets personality of the user, so that a degree of matching between the answer and the user can be improved.

Optionally, the client 110 further includes a processing unit 1104, configured to parse the first query request, to retrieve the historical information from a plurality of historical query requests and corresponding answers that are stored on a client, where a similarity between the historical information and the first query request is greater than a first threshold.

Optionally, the first answer is determined by the cloud based on a second query request, and the second query request is obtained by the cloud by rewriting the first query request based on the historical information.

Optionally, the first query request further includes a first style selected by a user, and the first style indicates a presentation form of the first answer; and the display unit 1103 is configured to present the content of the first answer in the first style.

Optionally, the first style is selected by the user from a plurality of styles through a style button on a search and question answering interface, and the plurality of styles are displayed after the style button is triggered.

Optionally, the first answer includes a second style, and the second style is a presentation form that is of the first answer and that is determined by the cloud based on the historical information; and the display unit 1103 is configured to present the content of the first answer in the second style.

Optionally, the sending unit 1101 is further configured to: if the first query request conflicts with at least one of the historical query requests, send a clarification response to the cloud, where the clarification response indicates the cloud to ignore the historical query request in conflict, or the clarification response indicates the cloud not to ignore the historical query request in conflict.

Optionally, if the clarification response indicates the cloud to ignore the historical query request in conflict, the first answer does not include information associated with the historical query request in conflict.

Optionally, if the clarification response indicates the cloud not to ignore the historical query request in conflict, the first answer includes conflict prompt information, and the conflict prompt information is information determined based on the historical query request in conflict and the first query request.

Optionally, the processing unit 1104 is further configured to: determine the corresponding historical information for the first query request in response to selection of a remember mode by the user, where the remember mode is presented on the search and question answering interface in a form of a button.

In this embodiment of this application, operations performed by units in the client 110 are similar to those described in the embodiment shown in FIG. 3 to FIG. 10. Details are not described herein again.

As shown in FIG. 12, an embodiment of this application further provides another structure of a cloud apparatus 120, including:
a receiving unit 1201, configured to receive a first query request and corresponding historical information from a client, where the historical information includes at least one of a historical query request associated with the first query request and a corresponding answer;
a processing unit 1202, configured to generate a first answer based on the first query request and the historical information, where content of the first answer is associated with the historical information; and
a sending unit 1203, configured to send the first answer to the client.

In this application, the cloud generates, under guidance of the historical information from the client, the first answer requested by the first query request, and the historical information may reflect a feature of a user who uses the client. The first answer generated in this way better aligns with user perception, improving a degree of matching between the answer and the user.

Optionally, the first query request further includes a first style selected by a user, and the first style indicates a presentation form of the first answer; and the processing unit 1202 is specifically configured to: determine the content of the first answer based on the second query request and the historical information, and merge the first style with the content of the first answer, to obtain the first answer.

Optionally, the processing unit 1202 is specifically configured to: determine a style preference of a user based on the historical information, and determine a second style based on the style preference, where the second style indicates a presentation form of the first answer; and determine the content of the first answer based on the second query request and the historical information, and merge the second style with the content of the first answer, to obtain the first answer.

Optionally, the processing unit 1202 is further configured to determine whether the first query request conflicts with the historical query request.

The sending unit 1203 is further configured to: if the first query request conflicts with the historical query request, send a query clarification request to the client, where the query clarification request indicates that the first query request conflicts with at least one historical query request, and indicates whether to ignore the historical query request in conflict.

The receiving unit 1201 is further configured to receive a clarification response from the client, where the clarification response indicates to ignore the historical query request in conflict or not to ignore the historical query request in conflict.

Optionally, the processing unit 1202 is further configured to: if the clarification response indicates the cloud to ignore the historical query request in conflict, before generating the first answer based on the first query request and the historical information, delete the historical query request in conflict and a corresponding answer from the historical information; and correspondingly, the first answer does not include information associated with the historical query request in conflict.

Optionally, if the clarification response indicates the cloud not to ignore the historical query request in conflict, correspondingly, the first answer includes conflict prompt information, and the conflict prompt information is information determined based on the historical query request in conflict and the first query request.

In this embodiment of this application, operations performed by units in the cloud apparatus 110 are similar to those described in the embodiment shown in FIG. 3 to FIG. 10. Details are not described herein again.

In another embodiment of this application, a computer-readable storage medium is further provided. The computer-readable storage medium stores computer-executable instructions. When a processor of a cloud apparatus executes the computer-executable instructions, the cloud apparatus performs the steps performed by the cloud in FIG. 3 to FIG. 10.

In another embodiment of this application, a computer-readable storage medium is further provided. The computer-readable storage medium stores computer-executable instructions. When a processor of a client executes the computer-executable instructions, the client performs the steps performed by the client in FIG. 3 to FIG. 10.

In another embodiment of this application, a computer program product is further provided. The computer program product includes computer program code. When the computer program code is executed on a computer, the computer device performs the steps performed by the cloud or the client in FIG. 3 to FIG. 10.

In another embodiment of this application, a chip system is further provided. The chip system includes one or more interface circuits and one or more processors. The interface circuit and the processor are interconnected through a line. The interface circuit is configured to: receive a signal from a memory of a terminal, and send the signal to the processor, where the signal includes computer instructions stored in the memory. When the processor executes the computer instructions, the terminal performs the steps performed by the cloud apparatus or the client in FIG. 3 to FIG. 10. In a possible design, the chip system may further include a memory. The memory is configured to store program instructions and data that are necessary for a control device. The chip system may include a chip, or may include a chip and another discrete component.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. All or some of the integrated units may be implemented by using software, hardware, firmware, or any combination thereof.

When software is used to implement the integrated units, all or some of the integrated units may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or transmitted from one computer-readable storage medium to another computer-readable storage medium. For example, the computer instructions may be transmitted from one website, computer, server or data center to another website, computer, server or data center in a wired (for example, a coaxial cable, an optical fiber or a digital subscriber line (digital subscriber line, DSL)) or wireless (for example, infrared, wireless or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state disk, SSD)), or the like.

## Claims

1. A search and question answering method, comprising:
sending a first query request and corresponding historical information to a cloud, wherein the historical information comprises at least one of a historical query request associated with the first query request and a corresponding answer;
receiving a first answer from the cloud, wherein content of the first answer is associated with the historical information; and
presenting the first answer.

2. The method according to claim 1, wherein before sending the first query request and the corresponding historical information to the cloud, the method further comprises:
parsing the first query request, to retrieve the historical information from a plurality of historical query requests and corresponding answers that are stored on a client, wherein a similarity between the historical information and the first query request is greater than a first threshold.

3. The method according to claim 1 or 2, wherein the first answer is determined by the cloud based on a second query request, and the second query request is obtained by the cloud by rewriting the first query request based on the historical information.

4. The method according to any one of claims 1 to 3, wherein the first query request further comprises a first style selected by a user, and the first style indicates a presentation form of the first answer; and
presenting the first answer comprises: presenting the content of the first answer in the first style.

5. The method according to claim 4, wherein the first style is selected by the user from a plurality of styles through a style button on a search and question answering interface, and the plurality of styles are displayed after the style button is triggered.

6. The method according to any one of claims 1 to 3, wherein the first answer comprises a second style, and the second style is a presentation form that is of the first answer and that is determined by the cloud based on the historical information; and
presenting the first answer comprises: presenting the content of the first answer in the second style.

7. The method according to any one of claims 1 to 6, wherein the method further comprises:
if the first query request conflicts with at least one of the historical query requests, sending a clarification response to the cloud, wherein the clarification response indicates the cloud to ignore the historical query request in conflict, or the clarification response indicates the cloud not to ignore the historical query request in conflict.

8. The method according to claim 7, wherein
if the clarification response indicates the cloud to ignore the historical query request in conflict, the first answer does not comprise information associated with the historical query request in conflict.

9. The method according to claim 7, wherein
if the clarification response indicates the cloud not to ignore the historical query request in conflict, the first answer comprises conflict prompt information, and the conflict prompt information is information determined based on the historical query request in conflict and the first query request.

10. The method according to any one of claims 1 to 9, wherein the method further comprises:
determining the corresponding historical information for the first query request in response to selection of a remember mode by the user, wherein the remember mode is presented on the search and question answering interface in a form of a button.

11. A search and question answering method, comprising:
receiving a first query request and corresponding historical information from a client, wherein the historical information comprises at least one of a historical query request associated with the first query request and a corresponding answer;
generating a first answer based on the first query request and the historical information, wherein content of the first answer is associated with the historical information; and
sending the first answer to the client.

12. The method according to claim 11, wherein generating the first answer based on the first query request and the historical information comprises:
rewriting the first query request based on the historical information, to obtain a second query request; and
generating the first answer based on the second query request and the historical information.

13. The method according to claim 12, wherein the first query request further comprises a first style selected by a user, and the first style indicates a presentation form of the first answer; and
generating the first answer based on the second query request and the historical information comprises:
determining the content of the first answer based on the second query request and the historical information, and merging the first style with the content of the first answer, to obtain the first answer.

14. The method according to claim 12, wherein generating the first answer based on the second query request and the historical information comprises:
determining a style preference of a user based on the historical information, and determining a second style based on the style preference, wherein the second style indicates a presentation form of the first answer; and
determining the content of the first answer based on the second query request and the historical information, and merging the second style with the content of the first answer, to obtain the first answer.

15. The method according to any one of claims 11 to 14, wherein the method further comprises:
determining whether the first query request conflicts with the historical query request;
if the first query request conflicts with the historical query request, sending a query clarification request to the client, wherein the query clarification request indicates that the first query request conflicts with at least one historical query request, and indicates whether to ignore the historical query request in conflict; and
receiving a clarification response from the client, wherein the clarification response indicates to ignore the historical query request in conflict or not to ignore the historical query request in conflict.

16. The method according to claim 15, wherein if the clarification response indicates the cloud to ignore the historical query request in conflict, before the first answer is generated based on the first query request and the historical information, the historical query request in conflict and a corresponding answer are deleted from the historical information; and
correspondingly, the first answer does not comprise information associated with the historical query request in conflict.

17. The method according to claim 15, wherein if the clarification response indicates the cloud not to ignore the historical query request in conflict, correspondingly, the first answer comprises conflict prompt information, and the conflict prompt information is information determined based on the historical query request in conflict and the first query request.

18. A client, comprising:
a sending unit, configured to send a first query request and corresponding historical information to a cloud, wherein the historical information comprises at least one of a historical query request associated with the first query request and a corresponding answer;
a receiving unit, configured to receive a first answer from the cloud, wherein content of the first answer is associated with the historical information; and
a display unit, configured to present the first answer.

19. A cloud apparatus, comprising:
a receiving unit, configured to receive a first query request and corresponding historical information from a client, wherein the historical information comprises at least one of a historical query request associated with the first query request and a corresponding answer;
a processing unit, configured to generate a first answer based on the first query request and the historical information, wherein content of the first answer is associated with the historical information; and
a sending unit, configured to send the first answer to the client.

20. A client, comprising a transceiver, a processor, and a memory, wherein the transceiver and the processor are coupled to the memory, the memory is configured to store a program or instructions, and when the program or the instructions are executed by the processor, the client is enabled to perform the method according to any one of claims 1 to 10.

21. A cloud apparatus, comprising a communication interface, a processor, and a memory, wherein the communication interface and the processor are coupled to the memory, the memory is configured to store a program or instructions, and when the program or the instructions are executed by the processor, the cloud apparatus is enabled to perform the method according to any one of claims 11 to 17.

22. A computer-readable storage medium, wherein the computer-readable storage medium stores instructions, and when the instructions are run on a computer device, the computer device is enabled to perform the method according to any one of claims 1 to 17.

23. A computer program product, wherein the computer program product comprises computer program code, and when the computer program code is run on a computer device, the computer device is enabled to perform the method according to any one of claims 1 to 17.

24. A chip system, wherein the chip system comprises one or more interface circuits and one or more processors; the interface circuit and the processor are interconnected through a line; the interface circuit is configured to: receive a signal from a memory of a client, and send the signal to the processor, wherein the signal comprises computer instructions stored in the memory; and when the processor executes the computer instructions, the client performs the method according to any one of claims 1 to 10; or, the interface circuit is configured to: receive a signal from a memory of a cloud apparatus, and send the signal to the processor, wherein the signal comprises computer instructions stored in the memory; and when the processor executes the computer instructions, the cloud apparatus performs the method according to any one of claims 11 to 17.

25. A search and question answering system, comprising: a client and a cloud apparatus, wherein the client is configured to perform the method according to any one of claims 1 to 10, and the cloud apparatus is configured to perform the method according to any one of claims 11 to 17.
